# EUROPÄISCHE PATENTSCHRIFT

(11) **EP 2 719 873 B1**
(45) Veröffentlichungstag und Bekanntmachung des Hinweises auf die Patenterteilung: **21.02.2018**
(21) Anmeldenummer: 13180814.9
(22) Anmeldetag: 19.08.2013
(51) Int. Cl.: F01N 13/18, F01N 3/20, F01N 3/28, F01N 13/08

(54) **Abgasanlage mit Leitungselement**
Exhaust system with conduit element
Installation de gaz d'échappement dotée d'un élément de conduite

(30) Priorität: 11.10.2012 DE 102012218565
(43) Veröffentlichungstag der Anmeldung: 16.04.2014
(73) Patentinhaber: Eberspächer Exhaust Technology GmbH & Co. KG, 66539 Neunkirchen (DE)
(72) Erfinder: Többen, Heike, 73066 Uhingen (DE); Calvo, Silvia, 73730 Esslingen (DE)
(74) Vertreter: BRP Renaud & Partner mbB Rechtsanwälte Patentanwälte Steuerberater

(56) Entgegenhaltungen:
- WO-A1-2005/103459
- WO-A1-2012/089290
- DE-A1- 3 526 481
- DE-A1-102010 025 611
- DE-A1-102011 015 772
- FR-A1- 2 971 546
- US-A- 5 145 215
- US-A- 5 167 430
- US-A1- 2002 171 240
- US-A1- 2003 079 467

## Beschreibung

Die Erfindung betrifft eine Abgasanlage für eine Brennkraftmaschine, insbesondere eines Kraftfahrzeugs, die mit wenigstens einem flexiblen Leitungselement ausgestattet ist, gemäß dem Oberbegriff des Anspruchs 1.

Aus der DE 196 41 963 C1 ist ein flexibles Leitungselement bekannt, das im Wesentlichen aus einem Metallbalg besteht, der ringförmig oder schraubenförmig gewellt ist und der von einem Abgasstrom durchströmbar ist. Der Metallbalg kann an seiner dem Abgasstrom zugewandten Innenseite und/oder an seiner vom Abgasstrom abgewandten Außenseite mit einem flexiblen Schlauch aus einem Geflecht oder Gestrick verkleidet sein. Im eingebauten Zustand kann der Metallbalg stromauf und/oder stromab an einen Leitungsabschnitt des Leitungselements bzw. der Abgasanlage angeschlossen sein.

Ein derartiges flexibles Leitungselement dient innerhalb der Abgasanlage im Wesentlichen zur Schwingungs- und Vibrationsentkopplung und kann typischerweise zwischen einem fest an der Brennkraftmaschine angebrachten Abschnitt der Abgasanlage und einem am Fahrzeug angebrachten Abschnitt der Abgasanlage angeordnet sein. Ein derartiges flexibles Leitungselement kann auch als Entkoppelelement bezeichnet werden. Im eingebauten Zustand bildet das flexible Leitungselement einen Bestandteil der Abgasanlage, so dass das Leitungselement auch als Abgasleitungselement bezeichnet werden kann.

Moderne Abgasanlagen können zur Reduzierung von Stickoxiden im Abgas mit einem SCR-System ausgestattet sein, wobei SCR für Selective Catalytic Reduction steht. Ein derartiges SCR-System umfasst eine Reduktionsmittelzuführeinrichtung sowie einen stromab davon angeordneten SCR-Katalysator. Mit Hilfe der Reduktionsmittelzuführeinrichtung kann ein geeignetes Reduktionsmittel in den Abgasstrom eingebracht werden. Als Reduktionsmittel eignet sich beispielsweise Ammoniak. Bevorzugt wird jedoch Harnstoff bzw. eine wässrige Harnstofflösung in den Abgasstrom eingebracht.

Bei ungünstigen Randbedingungen bzw. Betriebszuständen der Brennkraftmaschine besteht die Gefahr, dass sich im Abgasstrom Harnstoff und/oder Harnstoffderivate bilden, die sich an den Wänden abgasführender Bauteile anlagern können. Derartige Ablagerungen von Harnstoff und/oder Harnstoffderivaten können bei günstigen Betriebszuständen der Brennkraftmaschine regeneriert, also insbesondere wieder entfernt, aufgelöst oder verdampft werden. Ungünstige Randbedingungen sind beispielsweise niedrige Abgastemperaturen und geringe Strömungsgeschwindigkeiten im Abgas. Hierbei kann es zu einer unzureichenden Durchmischung des eingebrachten Harnstoffs mit dem Abgasstrom kommen. Ferner ist grundsätzlich eine Überdosierung von Harnstoff denkbar. Günstige Randbedingungen sind dagegen höhere Abgastemperaturen und höhere Strömungsgeschwindigkeiten im Abgasstrom.

Bei Abgasanlagen mit SCR-System kann nun der Wunsch auftreten, zwischen dem SCR-Katalysator und der Reduktionsmittelzuführeinrichtung ein flexibles Leitungselement der vorstehend beschriebenen Art einzubauen. Hierbei besteht die erhöhte Gefahr, dass sich gerade innerhalb des Metallbalgs die unerwünschten Ablagerungen der Harnstoffderivate ausbilden. Dies gilt insbesondere für den Fall, dass der Metallbalg an seiner Innenseite ohne weitere Schutzschicht dem Abgasstrom ausgesetzt ist. Die Wellenstruktur der Innenseite bietet ideale Anlagerungsmöglichkeiten für den Harnstoff und/oder die Harnstoffderivate. Problematisch ist dabei, dass die Möglichkeit einer Regeneration, also auch die Möglichkeit einer Verdampfung oder Ausspülung des Harnstoffs und/oder der Harnstoffderivate aus der Wellenstruktur signifikant reduziert ist, da dort eine direkte Beaufschlagung mit der Abgasströmung regelmäßig nicht erfolgen kann. Vielmehr bildet sich im Bereich der Wellenstruktur eine Strömungsgrenzschicht aus, in der kaum Querbewegungen erfolgen. Die Ablagerungen im Metallbalg führen jedoch zu einer Aussteifung des Metallbalgs, wodurch seine Funktion als Entkoppelelement zunehmend reduziert wird.

Aus der FR 2 971 546 A1 ist eine gattungsgemäße Abgasanlage bekannt. Sie umfasst einen Abgasstrang, in dem ein SCR-Katalysator und stromauf davon eine Reduktionsmittelzuführeinrichtung zum Einbringen eines Reduktionsmittels in den Abgasstrom angeordnet sind, wobei im Abgasstrang zwischen der Reduktionsmittelzuführeinrichtung und dem SCR-Katalysator ein flexibles Leitungselement angeordnet ist, das einen ringförmig oder schraubenförmig gewellten, von einem Abgasstrom durchströmbaren Metallbalg und einen konischen Strömungsleitkörper aufweist, der vom Abgasstrom durchströmbar ist, der sich in der Strömungsrichtung des Abgasstroms verjüngt und der in einen Eintrittsbereich des Metallbalgs freistehend hineinragt.

Aus der DE 35 26 481 A1 ist eine Rohrverbindung bekannt, die ein flexibles Wellrohr und zwei Rohrstücke umfasst, wobei die beiden Rohrstücke einerseits jeweils an einem der Längsenden des Wellrohrs befestigt sind und andererseits freistehend axial ineinander gesteckt sind.

Die vorliegende Erfindung beschäftigt sich daher mit dem Problem, für eine mit einem flexiblen Leitungselement ausgestattete Abgasanlage eine verbesserte Ausführungsform anzugeben, die sich insbesondere dadurch charakterisiert, dass die Gefahr unerwünschter Ablagerungen im Metallbalg reduziert ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, am Eintrittsbereich des Metallbalgs einen konischen Strömungsleitkörper anzuordnen, der sich in der Strömungsrichtung verjüngt und der vom Abgasstrom durchströmbar ist. Mit anderen Worten, die Erfindung schlägt allgemein vor, eine Kombination oder eine Einheit aus einem flexiblen Leitungselement und einem darin integrierten Strömungsleitkörper zu schaffen. Durch diese Maßnahme wird der Abgasstrom, der den Metallbalg durchströmt, bei der Durchströmung des Strömungsleitkörpers konzentriert. Zum einen wird dadurch die Strömungsgeschwindigkeit erhöht, was die Gefahr von Ablagerungen im Metallbalg reduziert. Zum anderen wird der Abgasstrom von der Innenseite des Metallbalgs entfernt, also stärker beabstandet, wodurch ebenfalls die Gefahr von Ablagerungen reduziert wird.

Zweckmäßig ist der Strömungsleitkörper am Metallbalg so angeordnet, dass er in den Eintrittsbereich freistehend hineinragt. Auf diese Weise wird bereits im Eintrittsbereich eine unmittelbare Beaufschlagung der Innenseite des Metallbalgs mit Abgas effizient verhindert. Gleichzeitig wird durch das freistehende Hineinragen des Strömungsleitkörpers eine Beeinträchtigung der Flexibilität des Metallbalgs vermieden. Insbesondere kann vorgesehen sein, dass sich der Strömungsleitkörper mit seinem Auslassende nicht am Metallbalg abstützt, was die Flexibilität des Metallbalgs erheblich beeinträchtigen würde.

Zweckmäßig kann ferner vorgesehen sein, dass ein Einlassende des Strömungsleitkörpers den durchströmbaren Querschnitt des Leitungselements am Eintrittsbereich des Metallbalgs vollständig ausfüllt. Mit anderen Worten, der konische Strömungsleitkörper schließt mit seinem Einlassende radial an den Innenquerschnitt des Metallbalgs bzw. eines stromauf des Metallbalgs angeordneten Leitungsabschnitts des Leitungselements an. In der Folge ist der Abgasstrom gezwungen, insgesamt, also vollständig durch den Strömungsleitkörper zu strömen.

Weiter ist von besonderem Vorteil eine Ausführungsform, bei welcher der konische Strömungsleitkörper konzentrisch bezüglich einer Längsmittelachse des Metallbalgs angeordnet ist. Hierdurch wird der Abgasstrom bei der Durchströmung des Strömungsleitkörpers konzentrisch zur Längsmittelachse des Metallbalgs eingeschnürt, so dass in der Umfangsrichtung gleichmäßig der Abstand zwischen dem Metallbalg und der Abgasströmung vergrößert werden kann.

Der konische Strömungsleitkörper kann als Kegelstumpf ausgestaltet sein. Ebenso ist es grundsätzlich möglich, den Strömungsleitkörper als Teil einer Kugel oder als Teil eines Ellipsoiden auszugestalten.

Gemäß einer vorteilhaften Ausführungsform kann der Strömungsleitkörper mit seinem Einlassende am Metallbalg befestigt sein. Der Metallbalg kann an seinem Eintrittsbereich einen zylindrischen Anschluss aufweisen. Der Strömungsleitkörper kann an seinem Einlassende komplementär dazu geformt sein.

Alternativ ist es ebenso möglich, das flexible Leitungselement mit einem stromauf des Metallbalgs angeordneten Leitungsabschnitt auszustatten, an dem der Strömungsleitkörper mit seinem Einlassende befestigt ist. Auch der Leitungsabschnitt besitzt zweckmäßig einen zylindrischen Bereich, an dem der Strömungsleitkörper einlassseitig befestigt werden kann.

Bei einer vorteilhaften Ausführungsform kann der Strömungsleitkörper ein konischer Rohrkörper sein, der einlassseitig und/oder auslassseitig axial offen ist. Durch den konvergierenden Rohrkörper kann eine Art Düseneffekt erzielt werden, der die Strömung einerseits auf einen reduzierten Strömungsquerschnitt konzentriert und andererseits die Strömungsgeschwindigkeit entsprechend erhöht. Hierdurch ergibt sich ein besonders einfacher Aufbau, der einen vergleichsweise niedrigen Strömungswiderstand besitzt.

Vorzugsweise ist der Rohrkörper zumindest in seinem zum Auslassende führenden Ausblassbereich gleichförmig und/oder stetig sowie insbesondere ungestuft konisch. Hierdurch kann eine zusätzliche, z.B. durch eine abrupte Geometrieänderung bewirkte Querschnittsverengung am Auslassende vermieden werden. Eine derartige zusätzliche Querschnittsverengung am Auslassende kann dort insbesondere eine Abrisskante bilden und zu starken Verwirbelungen führen, die nach außen orientierte Querströmungen unterstützen, so dass der Düseneffekt des konischen Rohrkörpers weitgehend eliminiert wird.

Ein Mantel des Rohrkörpers kann perforiert sein, um den Strömungswiderstand des Strömungsleitkörpers zu reduzieren.

Erfindungsgemäß weist der Strömungsleitkörper eine Abscheideeinrichtung für Harnstoff und/oder Hamstoffderivate auf oder ist als solche ausgestaltet. Sofern der Strömungsleitkörper durch einen Rohrkörper gebildet ist, kann die im Rohrkörper angeordnete Abscheideeinrichtung zweckmäßig so konfiguriert sein, dass sie nur mit einer Randschicht des Abgasstroms zusammenwirkt, um in der Randschicht des Abgasstroms mitgeführten flüssigen Harnstoff bzw. mitgeführte Harnstoffderivate abzuscheiden, z.B. aus dem Wandfilm, der sich an einer dem Abgasstrom zugewandten Innenseite des Rohrkörpers ausbilden kann, z.B. durch Niederschlag und/oder Kondensation. Eine derartige Ausführungsform ist in mehrfacher Hinsicht vorteilhaft. Zum einen lassen sich mit einer derartigen Abscheideeinrichtung gezielt der Harnstoff und die während ungünstiger Betriebsbedingungen entstehenden Harnstoffderivate aus dem Abgasstrom abscheiden, wodurch eine Anlagerung an stromab liegenden Komponenten, insbesondere im Metallbalg, vermieden werden können. Zum anderen herrscht im Strömungsleitelement, also auch an der Abscheideeinrichtung, bei günstigen Betriebszuständen eine besonders hohe Strömungsgeschwindigkeit im Abgasstrom. Gleichzeitig kann der freistehende Strömungsleitkörper und somit auch die Abscheideeinrichtung durch den Abgasstrom besonders gut aufgeheizt werden, wodurch eine Regeneration von abgeschiedenem Harnstoff und/oder der abgeschiedenen Hamstoffderivate begünstigt ist.

Zweckmäßig ist die Abscheideeinrichtung ein sich in der Umfangsrichtung geschlossen und vom Rohrkörper radial nach innen erstreckender Ringkörper, z.B. in Form einer Blende aus geschlossenem Blech oder aus gelochtem Blech oder aus einem Gittermaterial. Ebenso kann der Ringkörper ein im Querschnitt U-förmiges Blech sein, dessen offene Seite der ankommenden Strömung zugewandt ist. Bevorzugt handelt es sich beim Ringkörper um ein Drahtgestrick. Denkbar ist auch eine Ausgestaltung des Ringkörpers als poröser Keramikschaum.

Die Abscheideeinrichtung ist dabei vorteilhaft stromauf eines Auslassendes des Strömungsleitkörpers im Strömungsleitkörper angeordnet, um eine zusätzliche Querschnittsverengung am Auslassende bzw. eine Abrisskante mit den damit einhergehenden Verwirbelungen zu vermeiden.

Eine derartige Abscheideeinrichtung kann grundsätzlich nach Art einer Harnstofffalle aufgebaut sein, die jedoch eine Regeneration bzw. eine Abgabe des abgeschiedenen Harnstoffs bzw. der abgeschiedenen Harnstoffderivate zulässt. Beispielsweise kann die Abscheideeinrichtung als Sammeleinrichtung für Harnstoffderivatablagerungen ausgestaltet sein oder eine solche aufweisen. Eine derartige Sammeleinrichtung kann beispielsweise mittels eines zentral offenen, in der Umfangsrichtung geschlossenen Ringkörpers realisiert sein, z.B. in Form eines Drahtgestrickrings, der vom Rohrkörper radial nach innen vorsteht und somit im Betrieb radial in eine Randschicht des Abgasstroms hineinragt.

Zusätzlich oder alternativ kann die Abscheideeinrichtung als Strömungshindernis für eine Randschicht des Abgasstroms ausgestaltet sein. Beispielsweise kann ein derartiges Strömungshindernis ebenfalls mittels eines zentral offenen, in der Umfangsrichtung geschlossenen Ringkörpers, z.B. in Form einer Blende, eines Rings, eines Lochblechs und/oder eines Drahtgestricks, realisiert werden.

Bei einer anderen vorteilhaften Ausführungsform kann im Rohrkörper des Strömungsleitkörpers ein statischer Mischer angeordnet oder ausgebildet sein. Mit Hilfe eines derartigen statischen Mischers kann der Abgasstrom, der durch den Strömungsleitkörper hindurchströmt, intensiv durchmischt werden. Da die Einbringung des Reduktionsmittels stromauf des Strömungsleitkörpers erfolgt, bewirkt der statische Mischer auch eine intensive Durchmischung des Reduktionsmittels mit dem Abgasstrom. Die verbesserte Durchmischung reduziert die Gefahr der Derivatbildung. Bei einer Kombination eines solchen Mischers mit einer Abscheideeinrichtung der vorstehend beschriebenen Art ist der Mischer zeckmäßig stromauf der Abscheideeinrichtung angeordnet, so dass in der Abscheideeinrichtung weniger abzuscheidende Stoffe anfallen.

Gemäß einer vorteilhaften Weiterbildung kann der Mischer als separates Bauteil ausgestaltet sein und in den Rohrkörper eingesetzt sein. Hierdurch kann ein an sich vorhandener Mischer verwendet und im Strömungsleitkörper verbaut werden, was die Entwicklungskosten reduzieren kann. Alternativ können jedoch an einem Mantel des Rohrkörpers Leitschaufeln ausgeformt sein, die den Mischer bilden. In diesem Fall sind die Leitschaufeln integrale Bestandteile des Mantels bzw. des Rohrkörpers, so dass letztlich auch der Mischer integral am Strömungsleitkörper ausgebildet ist. Hierdurch vereinfacht sich die Montage, da der Strömungsleitkörper bereits mit dem Mischer hergestellt ist.

Bei einer anderen vorteilhaften Ausführungsform kann der Strömungsleitkörper ein konischer Vollkörper sein, der aus einem durchströmbaren Material oder Materialmix besteht. Beispielsweise kann der Vollkörper zumindest einen Keramikschaum oder zumindest einen Metallschaum oder zumindest ein Drahtnetz oder zumindest ein Drahtgestrick oder eine beliebige Kombination der vorstehenden Strukturen umfassen. Der durchströmbare Vollkörper wirkt gleichzeitig als Harnstofffalle bzw. als Abscheideeinrichtung, so dass der durchströmbare Vollkörper im Abgasstrom mitgeführter Harnstoff und/oder mitgeführte Harnstoffderivate aus dem Abgasstrom ausscheiden kann. Im Falle günstiger Betriebszustände kann der durchströmbare Vollkörper regeneriert werden und darin angelagerten Harnstoff und/oder darin angelagerte Harnstoffderivate wieder freigeben.

Bei einer anderen vorteilhaften Ausführungsform kann ein weiterer Strömungsleitkörper vorgesehen sein, der vom Abgasstrom durchströmbar ist und der in einen Austrittsbereich des Metallbalgs freistehend hineinragt. Die vom eintrittsseitigen Strömungsleitkörper konzentrierte Abgasströmung kann mit Hilfe dieses weiteren, austrittsseitig angeordneten Strömungsleitkörpers quasi aufgefangen werden und aus dem Metallbalg herausgeführt werden. Insgesamt lässt sich dadurch die Gefahr einer Beaufschlagung des Metallbalgs mit dem Abgasstrom reduzieren. Gleichzeitig sinkt dadurch auch die Möglichkeit, dass sich Harnstoff und/oder Harnstoffderivate an der Innenseite des Metallbalgs anlagern.

Besonders vorteilhaft ist dabei eine Weiterbildung, bei der der eintrittsseitig angeordnete Strömungsleitkörper mit seinem Auslassende in ein Einlassende des weiteren, austrittsseitig angeordneten Strömungsleitkörpers freistehend hineinragt. Insbesondere können sich dabei die beiden Strömungsleitkörper axial überlappen. Dabei herrscht zwischen dem innenliegenden Auslassende des eintrittsseitigen Strömungsleitkörpers und dem außenliegenden Einlassende des austrittsseitigen Strömungsleitkörpers ein in der Umfangsrichtung vollständig umlaufender Ringspalt, der in der Radialrichtung eine vergleichsweise große Spaltbreite besitzt, derart, dass der Metallbalg weiterhin elastisch bzw. flexibel beweglich ist, ohne dass sich dabei die beiden Strömungsleitkörper berühren.

Bei einer anderen Ausführungsform kann der austrittsseitig angeordnete Strömungsleitkörper mit seinem Auslassende über Stege am Metallbalg oder an einem Leitungsabschnitt befestigt sein, der stromab des Metallbalgs angeordnet ist. Zusätzlich oder alternativ kann sich der austrittsseitig angeordnete Strömungsleitkörper zumindest in einem Längsabschnitt in der Strömungsrichtung des Abgasstroms verjüngen. Ebenso ist es möglich, dass sich der austrittsseitige Strömungsleitkörper im Bereich seines Auslassendes in der Strömungsrichtung aufweitet, insbesondere so weit, dass sich der austrittsseitige Strömungsleitkörper an seinem Auslassende unmittelbar am Metallbalg oder am stromab angeordneten Leitungsabschnitt abstützen lässt.

Der Metallbalg kann an seiner Innenseite und/oder an seiner Außenseite mit einer Schutzschicht, bspw. in Form eines Gestrickschlauchs oder Gewebeschlauchs ausgestattet sein. Ferner ist es insbesondere möglich, den Metallbalg an seiner Außenseite mit einem Agraff-Schlauch zu versehen, der den Metallschlauch koaxial umschließt. Ein derartiger Agraff-Schlauch besteht aus einem, insbesondere S-förmig profilierten Metallband, das schraubenförmig aufgewickelt ist, wobei innerhalb der Windungen benachbarte Seitenränder des Metallbands miteinander in Eingriff stehen. Ein derartiger Agraff-Schlauch besitzt eine vergleichsweise hohe Zug- und Druckstabilität sowie eine relativ hohe Flexibilität. Zusätzlich oder alternativ kann der Metallbalg aus einem einlagigen bzw. einschichtigen Metallblech oder alternativ aus einem mehrlagigen bzw. mehrschichtigen Metallblech hergestellt sein.

Eine erfindungsgemäße Abgasanlage für eine Brennkraftmaschine, die insbesondere in einem Kraftfahrzeug angeordnet sein kann, umfasst somit zumindest einen Abgasstrang, in dem ein SCR-Katalysator und stromauf davon eine Reduktionsmittelzuführeinrichtung zum Einbringen eines Reduktionsmittels in den Abgasstrom angeordnet sind. Ferner umfasst die erfindungsgemäße Abgasanlage im Abgasstrang zwischen der Reduktionsmittelzuführeinrichtung und dem SCR-Katalysator ein flexibles Leitungselement der vorstehend beschriebenen Art.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit einer Abgasanlage,
- Fig. 2-5: jeweils einen stark vereinfachten Längsschnitt eines flexiblen Leitungselements bei verschiedenen Ausführungsformen, wobei Fig. 2 eine nicht erfindungsgemäße Ausführungsform zeigt,
- Fig. 6a,b: isometrische Ansichten eines Strömungsleitkörpers einer besonderen Ausführungsform in verschiedenen Blickrichtungen a und b,
- Fig. 7: eine teilweise transparente isometrische Ansicht des Strömungsleitkörpers bei einer anderen Ausführungsform,
- Fig. 8: eine isometrische Ansicht eines weiteren Strömungsleitkörpers in Form eines Delta-Flügels.

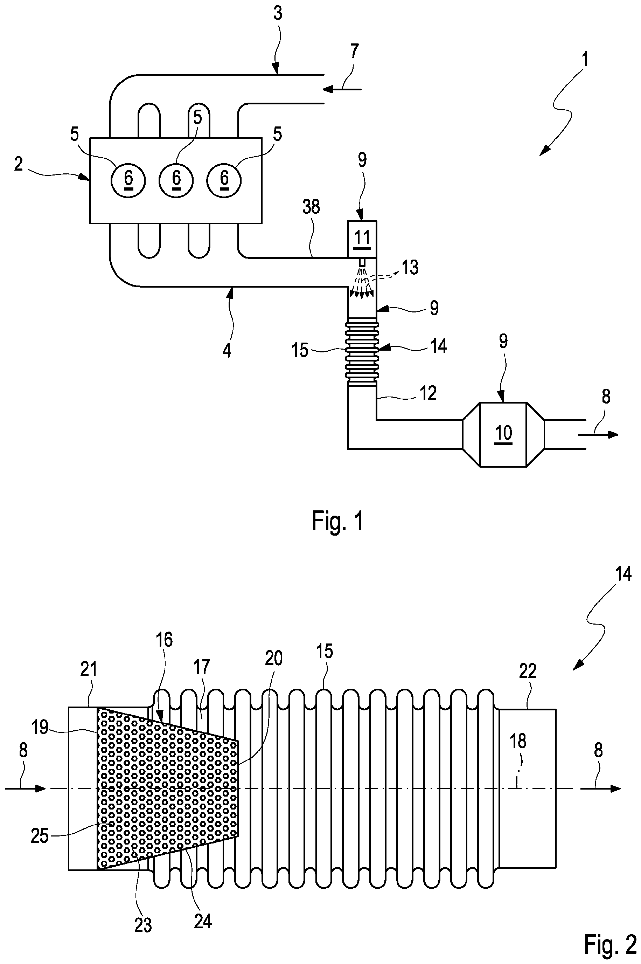

Entsprechend Fig. 1 umfasst eine Brennkraftmaschine 1 einen Motorblock 2, eine Frischluftanlage 3 und eine Abgasanlage 4. Der Motorblock 2 enthält in mehreren Zylindern 5 je einen Brennraum 6. Die Frischluftanlage 3 dient zur Versorgung der Brennräume 6 mit Frischluft. Ein entsprechender Frischluftstrom 7 ist durch einen Pfeil angedeutet. Die Abgasanlage 4 umfasst zumindest einen Abgasstrang 38 und dient zum Wegführen von Abgas von den Brennräumen 6. Ein entsprechender Abgasstrom 8 ist durch einen Pfeil angedeutet. Die Abgasanlage 4 ist mit einem SCR-System 9 ausgestattet, das im Abgasstrang 38 einen SCR-Katalysator 10, eine Reduktionsmittelzuführeinrichtung 11 und eine Mischstrecke 12 umfasst, die von der Reduktionsmittelzuführeinrichtung 11 zum SCR-Katalysator 10 führt. Die Reduktionsmittelzuführeinrichtung 11 kann dem Abgasstrom 8 ein Reduktionsmittel, vorzugsweise wässrige Harnstofflösung zuführen. Hierzu wird entsprechend Pfeilen 13 das Reduktionsmittel in die Abgasanlage 4 eingebracht, insbesondere eingedüst oder eingespritzt. Die Mischstrecke 12, die den Abgasstrom mit dem darin eingebrachten Reduktionsmittel 13 von der Reduktionsmittelzuführeinrichtung 11 zum SCR-Katalysator 10 führt, ist durch einen Abschnitt der Abgasanlage 4 bzw. des Abgasstrangs 38 gebildet. Der SCR-Katalysator 10 ist stromab der Reduktionsmittelzuführeinrichtung 11 angeordnet und ermöglicht im Betrieb eine selektive katalytische Reduktion von Stickoxiden.

Die Abgasanlage 4 ist mit einem flexiblen Leitungselement 14 ausgestattet, das hier zwischen dem SCR-Katalysator 10 und der Reduktionsmittelzuführeinrichtung 11 angeordnet ist, also in der Mischstrecke 12. Das Leitungselement 14 umfasst entsprechend den Figuren 1-5 einen ringförmig oder schraubenförmig gewellten Metallbalg 15 und ist vom Abgasstrom 8 durchströmbar.

Entsprechend den Figuren 2-5 umfasst das flexible Leitungselement 14 außerdem einen konischen Strömungsleitkörper 16. Der Strömungsleitkörper 16 ist ebenfalls vom Abgasstrom 8 durchströmbar und verjüngt sich in der Strömungsrichtung des Abgasstroms 8. Ferner ist der Strömungsleitkörper 16 so angeordnet, dass er in einen Eintrittsbereich 17 des Metallbalgs 15 freistehend hineinragt. Bei den gezeigten Ausführungsformen ist der Strömungsleitkörper 16 jeweils kegelstumpfförmig ausgestaltet, so dass er senkrecht zur Längsmittelachse 18 des Metallbalgs 15 ein ebenes Einlassende 19 sowie ein ebenes Auslassende 20 aufweist. Grundsätzlich sind jedoch auch andere Ausgestaltungen des Strömungsleitkörpers 16 denkbar, zum Beispiel in Form eines Kugelsegments oder eines Ellipsoidsegments.

Bei den hier gezeigten Ausführungsformen ist der Strömungsleitkörper 16 mit seinem Einlassende 19 an einem Leitungsabschnitt 21 befestigt, der sich stromauf des Metallbalgs 15 befindet und an den Metallbalg 15 angeschlossen ist. Grundsätzlich kann der Strömungsleitkörper 16 mit seinem Einlassende 19 auch unmittelbar am Metallbalg 15 befestigt sein. Der stromauf angeordnete Leitungsabschnitt 21 kann einen eintrittsseitigen Anschluss des Metallbalgs 15 bzw. des Leitungselements 14 definieren, mit dem das Leitungselement 14 in den Abgasstrang 38 der Abgasanlage 4 eingebunden werden kann. Dementsprechend umfasst das Leitungselement 14 auch einen stromab angeordneten Leitungsabschnitt 22, der einen Anschluss des Metallbalgs 15 bzw. des Leitungselements 14 definiert, mit dem das Leitungselement abströmseitig in den Abgasstrang 38 der Abgasanlage 4 eingebunden werden kann.

Bei den Ausführungsformen der Figuren 1, 3 und 5 handelt es sich beim Strömungsleitkörper 16 bevorzugt um einen konischen Rohrkörper 23, dessen Mantel 24 bei der in Figur 2 gezeigten nicht erfindungsgemäßen Ausführungsform eine Perforation 25 aufweisen kann.

Der Strömungsleitkörper 16 ist bei allen hier gezeigten Ausführungsformen koaxial bzw. konzentrisch zur Längsmittelachse 18 des Metallbalgs 15 angeordnet, so dass der Strömungsleitkörper 16 symmetrisch im Metallbalg 15 angeordnet ist. Zweckmäßig ist der Strömungsleitkörper 16 so angeschlossen, dass sein Einlassende 19 radial außen in der Umfangsrichtung vollständig geschlossen an einer Innenseite des Leitungselements 14 zur Anlage kommt, so dass der ganze Abgasstrom 8 gezwungen ist, durch den Strömungsleitkörper 16 hindurchzuströmen.

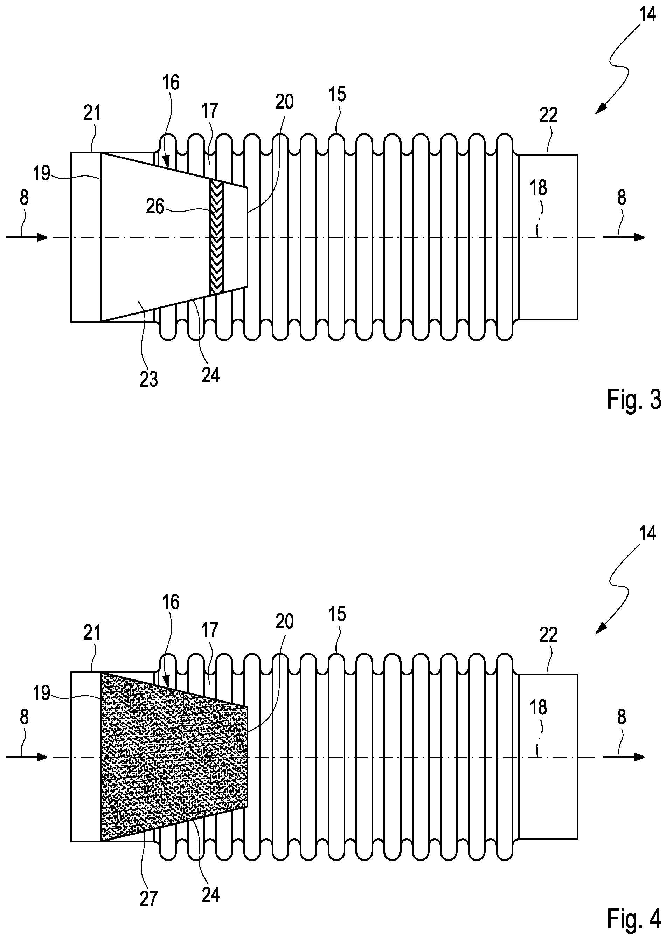

Gemäß der in Figur 3 gezeigten Ausführungsform kann der Rohrkörper 23 eine Abscheideeinrichtung 26 für Harnstoff bzw. Harnstoffderivate enthalten. Die Abscheideeinrichtung 26 ist im durchströmbaren Querschnitt des Rohrkörpers 23 angeordnet, derart, dass sie zumindest Harnstoff bzw. Harnstoffderivate, die in einer Randschicht des Abgasstroms 8 mitgeführt werden, aus dem Abgasstrom 8 abscheiden kann. Eine derartige Abscheideeinrichtung 26 kann beispielsweise als Sammeleinrichtung für Harnstoffderivat-Ablagerungen ausgestaltet sein oder eine derartige Sammeleinrichtung aufweisen. Zusätzlich oder alternativ kann die Abscheideeinrichtung 26 als Strömungshindernis für eine radial außenliegende Randschicht des Abgasstroms 8 ausgestaltet sein. Beispielsweise handelt es sich bei der Abscheideeinrichtung 26 bzw. beim Strömungshindernis bzw. bei der Sammeleinrichtung um einen Ringkörper, der radial nach innen vom Rohrkörper 23 absteht und sich in der Umfangsrichtung geschlossen erstreckt, wie z.B. eine ringförmige Blende, die insbesondere aus einem Lochblech hergestellt sein kann. Ebenso kann es sich beim Ringkörper um ein, vorzugsweise ringförmig angeordnetes, Drahtgestrick handeln.

Bei der in Figur 4 gezeigten Ausführungsform ist der Strömungsleitkörper 16 durch einen konischen Vollkörper 27 gebildet, der ebenfalls durchströmbar ist und hierzu aus einem durchströmbaren Material oder Materialmix besteht. Geeignete Materialien sind beispielsweise Keramikschaum, Metallschaum, Drahtnetz, Drahtgestrick. Der Vollkörper 27 kann aus jedem dieser Materialien bestehen oder aus einer beliebigen Kombination daraus. In diesem Fall kann der durchströmbare Vollkörper 27 selbst als Abscheideeinrichtung 26 ausgestaltet sein bzw. als solche wirken.

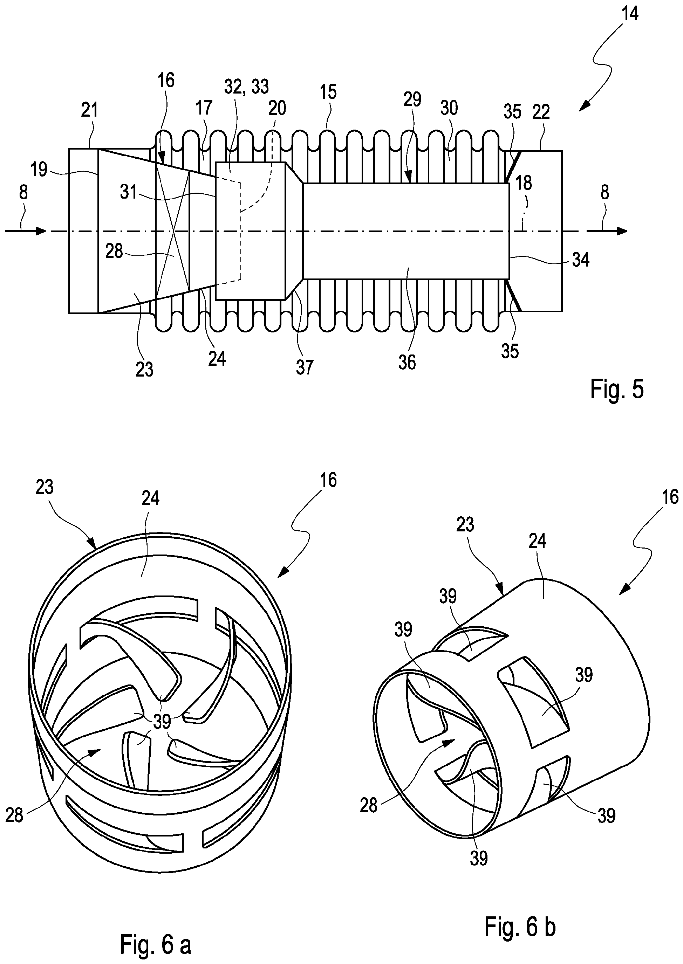

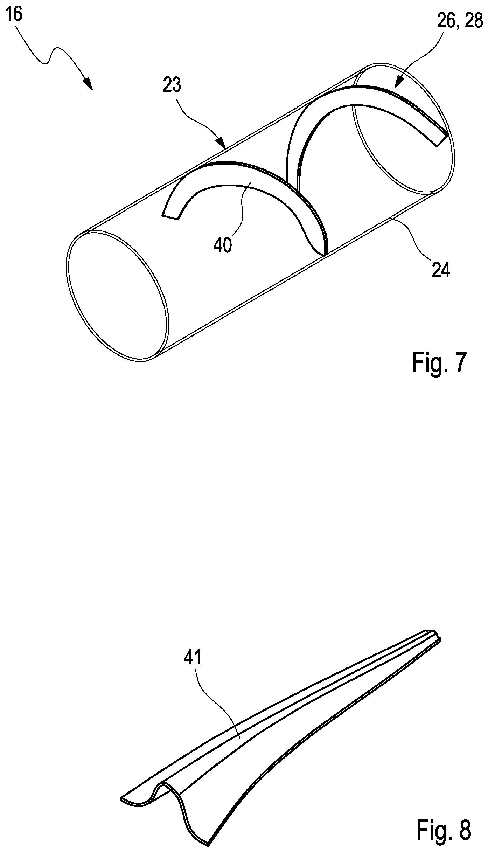

Bei der in Figur 5 gezeigten Ausführungsform kann im Rohrkörper 23 ein statischer Mischer 28 angeordnet oder ausgebildet sein. Der Mischer 28 kann beispielsweise als separates Bauteil konzipiert sein, das in den Rohrkörper 23 bzw. in den Mantel 24 eingesetzt ist. Alternativ ist es grundsätzlich denkbar, in Fig. 5 nicht gezeigte Leitschaufeln, die den Mischer 28 bilden, integral am Mantel 24 auszuformen. Beispielsweise kann gemäß den Fig. 6a und 6b der konische, hohle Rohrkörper 23 aus seinem Mantel 24 freigeschnittene und nach innen ausgestellte Leitschaufeln 39 aufweisen. Die Leitschaufeln 39 berühren sich zweckmäßig nicht und definieren den Mischer 28. Die Leitschaufeln 39 sind dabei vorzugsweise gleichförmig angestellt und/oder verwunden, so dass sie den durchströmenden Abgasstrom 8 mit einem Drall beaufschlagen können. Fig. 7 deutet eine andere Ausführungsform an, bei welcher anstelle mehrerer Leitschaufeln 39 eine Leitspirale 40 vorgesehen ist, die sich entlang der Innenseite des transparent dargestellten Mantels 24 schraubenförmig windet und dabei nach innen vorsteht. Auch mithilfe dieser Leitspirale 40 kann der Abgasstrom 8 mit einem Drall beaufschlagt werden. Die Leitspirale 40 kann dabei als Mischer 28 dienen. Ebenso kann die Leitspirale 40 ein Strömungshindernis bilden, das als Abscheideeinrichtung 26 dient, mit deren Hilfe aus der Strömungsgrenzschicht Harnstoff und/oder Harnstoffderivate abgeschieden werden können. Obwohl in der Darstellung der Fig. 7 der Rohrkörper 23 im Wesentlichen zylindrisch dargestellt ist, soll er ebenfalls konisch sein. Grundsätzlich ist es jedoch ebenfalls möglich, einen Mischer 28 und/oder eine Abscheideeinrichtung 26 stromauf des Strömungsleitkörpers 16 in dem anströmseitigen Leitungsabschnitt 21 anzuordnen oder auszubilden.

Bei der in Figur 5 gezeigten Ausführungsform ist ein weiterer Strömungsleitkörper 29 vorgesehen. Dieser weitere Strömungsleitkörper 29 ist ebenfalls vom Abgasstrom 8 durchströmbar und ragt in einen Austrittsbereich 30 des Metallbalgs 15 freistehend hinein. Hierdurch ergibt sich zwischen den beiden Strömungsleitkörpern 16, 29 eine axiale Überlappung 32, die einen in der Umfangsrichtung geschlossen umlaufenden Ringraum 33 bildet, so dass sich die beiden Strömungsleitkörper 16, 29 nicht berühren.

Der austrittsseitige Strömungsleitkörper 29 ist mit seinem Auslassende 34 beispielsweise über Stege 35 am Metallbalg 15 oder am abströmseitigen Leitungsabschnitt 22 befestigt. Der austrittsseitige Strömungsleitkörper 29 ist vorzugsweise ebenfalls ein Rohrkörper 36, der insgesamt konisch ausgestaltet sein kann. Im gezeigten Beispiel ist der Rohrkörper 36 nur in einem Längsabschnitt 37 konisch, derart, dass er sich in der Strömungsrichtung des Abgasstroms 8 verjüngt.

Zusätzlich oder alternativ zu diesem zusätzlichen oder austrittsseitigen rohrförmigen Strömungsleitkörper 29 kann wenigstens ein anderer Strömungsleitkörper 41 vorgesehen sein, der im anströmseitigen Strömungsleitkörper 16 oder stromauf davon oder stromab davon angeordnet sein kann. Ebenso kann dieser weitere Strömungsleitkörper 41 im abströmseitigen Strömungsleitkörper 29 oder stromauf davon oder stromab davon angeordnet sein. Gemäß Fig. 8 kann ein solcher weiterer Strömungsleitkörper 41 beispielsweise als Delta-Flügel ausgestaltet sein, der am Mantel 24 oder beispielsweise mittels entsprechender, hier nicht gezeigter Stege weitgehend freistehend im Leitungselement 14, insbesondere im anströmseitigen oder abströmseitigen Strömungsleitkörper 16, 29 angeordnet sein kann. Bevorzugt sind am Mantel 24 mehrere derartige Strömungsleitelemente 41 in der Umfangsrichtung verteilt angeordnet.

Die einzelnen Merkmale der hier vorgestellten Varianten des Leitungselements 14 lassen sich - soweit sinnvoll - untereinander beliebig kombinieren. Bspw. kann der austrittsseitige Strömungsleitkörper 29 der in Fig. 5 gezeigten Ausführungsform auch bei den in den Fig. 2 bis 4 gezeigten Ausführungsformen realisiert werden. Ferner kann die perforierte Wandung 25 der in Fig. 2 gezeigten Ausführungsform auch bei den eintrittsseitigen Strömungsleitkörpern 16 der Ausführungsformen der Fig. 3 und 5 sowie beim austrittsseitigen Strömungsleitkörper 29 der Ausführungsform gemäß Fig. 5 realisiert werden. Des Weiteren lässt sich die Abscheideeinrichtung 26 der in Fig. 3 (und Fig. 7) gezeigten Ausführungsform auch bei den eintrittsseitigen Strömungsleitkörpern 16 der Ausführungsformen der Fig. 4 und 5 realisieren, ebenso beim austrittsseitigen Strömungsleitkörper 29 der Fig. 5. Auch der Mischer 28, der bei der in Fig. 5 (und in den Fig. 6 und 7) gezeigten Ausführungsform im eintrittsseitigen Strömungsleitkörper 16 vorgesehen ist, kann bei den Ausführungsformen der Fig. 2 und 3 realisiert werden. Zusätzlich oder alternativ ist es grundsätzlich möglich, einen derartigen Mischer 28 in dem austrittsseitigen Strömungsleitkörper 29 gemäß Fig. 5 anzuordnen.

## Patentansprüche

1. Abgasanlage für eine Brennkraftmaschine (1), insbesondere eines Kraftfahrzeugs,
- mit mindestens einem Abgasstrang (38), in dem ein SCR-Katalysator (10) und stromauf davon eine Reduktionsmittelzuführeinrichtung (11) zum Einbringen eines Reduktionsmittels in den Abgasstrom (8) angeordnet sind,
- wobei im Abgasstrang (38) zwischen der Reduktionsmittelzuführeinrichtung (11) und dem SCR-Katalysator (10) ein flexibles Leitungselement (14) angeordnet ist, das einen ringförmig oder schraubenförmig gewellten, von einem Abgasstrom (8) durchströmbaren Metallbalg (15) und einen konischen Strömungsleitkörper (16) aufweist, der vom Abgasstrom (8) durchströmbar ist, der sich in der Strömungsrichtung des Abgasstroms (8) verjüngt und der in einen Eintrittsbereich (17) des Metallbalgs (15) freistehend hineinragt,
**dadurch gekennzeichnet,**
**dass** der Strömungsleitkörper (16) eine Abscheideeinrichtung (26) für Harnstoff und/oder Harnstoffderivate aufweist oder als solche ausgestaltet ist.

2. Abgasanlage nach Anspruch 1,
**dadurch gekennzeichnet,**
**dass** der Strömungsleitkörper (16) mit seinem Einlassende (19) am Metallbalg (15) oder an einem stromauf des Metallbalgs (15) angeordneten Leitungsabschnitt (21) befestigt ist.

3. Abgasanlage nach Anspruch 1 oder 2,
**dadurch gekennzeichnet,**
**dass** der Strömungsleitkörper (16) ein konischer Röhrkörper (23) ist.

4. Abgasanlage nach Anspruch 3,
**dadurch gekennzeichnet,**
**dass** ein Mantel (24) des Rohrkörpers (23) perforiert ist.

5. Abgasanlage nach einem der Ansprüche 1 bis 4,
**dadurch gekennzeichnet,**
**dass** die Abscheideeinrichtung (26) als Sammeleinrichtung für Harnstoffderivat-Ablagerungen ausgestaltet ist oder eine solche aufweist.

6. Abgasanlage nach einem der Ansprüche 1 bis 5,
**dadurch gekennzeichnet,**
**dass** die Abscheideeinrichtung (26) als Strömungshindernis für eine Randschicht des Abgasstroms (8) ausgestaltet ist.

7. Abgasanlage nach Anspruch 3 oder 4 sowie nach einem der Ansprüche 1, 2, 5 und 6,
**dadurch gekennzeichnet,**
**dass** die Abscheideeinrichtung (26) durch einen Ringkörper gebildet ist oder einen Ringkörper aufweist, der radial nach innen vom Rohrkörper (23) absteht und sich in der Umfangsrichtung geschlossen erstreckt.

8. Abgasanlage zumindest nach Anspruch 3,
**dadurch gekennzeichnet,**
**dass** im Rohrkörper (23) ein statischer Mischer (28) angeordnet oder ausgebildet ist.

9. Abgasanlage nach Anspruch 8,
**dadurch gekennzeichnet,**
**dass** der Mischer (28) als separates Bauteil ausgestaltet ist und in den Rohrkörper (23) eingesetzt ist.

10. Abgasanlage nach Anspruch 8,
**dadurch gekennzeichnet,**
**dass** an einem Mantel (24) des Rohrkörpers (23) Leitschaufeln ausgeformt sind, die den Mischer (28) bilden.

11. Abgasanlage nach einem der Ansprüche 1, 2 und 4 bis 6,
**dadurch gekennzeichnet,**
**dass** der Strömungsleitkörper (16) ein konischer Vollkörper (27) ist, der aus einem durchströmbaren Material oder Materialmix besteht.

12. Abgasanlage nach Anspruch 11,
**dadurch gekennzeichnet,**
**dass** der Vollkörper (27) wenigstens einen Keramikschaum oder wenigstens ein Drahtnetz oder wenigstens ein Drahtgestrick oder eine beliebige Kombination daraus aufweist.

13. Abgasanlage nach einem der Ansprüche 1 bis 12,
**gekennzeichnet durch** einen weiteren Strömungsleitkörper (29), der vom Abgasstrom (8) durchströmbar ist und der in einem Austrittsbereich (30) des Metallbalgs (15) freistehend hineinragt.

14. Abgasanlage nach Anspruch 13,
**dadurch gekennzeichnet,**
- **dass** der eintrittsseitig angeordnete Strömungsleitkörper (16) mit seinem Auslassende (20) in ein Einlassende (31) des weiteren, austrittsseitig angeordneten Strömungsleitkörpers (29) freistehend hineinragt, und/oder
- **dass** der austrittsseitig angeordnete Strömungsleitkörper (29) mit seinem Auslassende (34), insbesondere über Stege (35), am Metallbalg (15) oder an einem Leitungsabschnitt (22) befestigt ist, der stromab des Metallbalgs (15) angeordnet ist, und/oder
- **dass** sich der austrittsseitig angeordnete Strömungsleitkörper (29) zumindest in einem Längsabschnitt (37) in der Strömungsrichtung des Abgasstroms (8) verjüngt.

## Claims

1. An exhaust system for an internal combustion engine (1), in particular of a motor vehicle,
- having at least one exhaust tract (38), in which are arranged an SCR catalyst (10) and downstream thereof a reducing agent supply apparatus (11) for introducing a reducing agent into the exhaust gas stream (8),
- wherein a flexible guiding element (14) is arranged in the exhaust tract (38) between the reducing agent supply apparatus (11) and the SCR catalyst (10), said guiding element (14) comprising a metal bellows (15), which is waved in an annular or helical manner and through which an exhaust gas stream (8) can flow, and a conical flow-guiding body (16), through which the exhaust gas stream (8) can flow, which tapers in the flow direction of the exhaust gas stream (8) and which projects in a free-standing manner into an entry region (17) of the metal bellows (15),
**characterised in that**
the flow-guiding body (16) has a separation apparatus (26) for urea and/or urea derivatives or is configured as such.

2. The exhaust system according to Claim 1,
**characterised in that**
the flow-guiding body (16) is fastened at its inlet end (19) to the metal bellows or to a guiding section (21) arranged upstream of the metal bellows (15).

3. The exhaust system according to Claim 1 or 2,
**characterised in that**
the flow-guiding body (16) is a conical tubular body (23).

4. The exhaust system according to Claim 3,
**characterised in that**
a jacket (24) of the tubular body (23) is perforated.

5. The exhaust system according to any one of Claims 1 to 4,
**characterised in that**
the separation apparatus (26) has or is configured as a collection apparatus for urea derivative accumulations.

6. The exhaust system according to any one of Claims 1 to 5,
**characterised in that**
the separation apparatus (26) is configured as a flow obstacle for an edge layer of the exhaust gas stream (8).

7. The exhaust system according to Claim 3 or 4 and according to one of Claims 1, 2, 5 and 6,
**characterised in that**
the separation apparatus (26) is formed by an annular body or has an annular body, which projects radially inwards from the tubular body (23) and extends in a closed manner in the circumferential direction.

8. The exhaust system at least according to Claim 3,
**characterised in that**
a static mixer (28) is arranged or formed in the tubular body (23).

9. The exhaust system according to Claim 8,
**characterised in that**
the mixer (28) is configured as a separate component and is inserted into the tubular body (23).

10. The exhaust system according to claim 8,
**characterized in that**
guide vanes forming the mixer (28) are formed on a jacket (24) of the tubular body (23).

11. The exhaust system according to one of Claims 1, 2 and 4 to 6, **characterised in that**
the flow-guiding body (16) is a solid conical body (27), which consists of a material or material mixture through which flow can pass.

12. The exhaust system according to Claim 11,
**characterised in that**
the solid body (27) has at least one ceramic foam or at least one wire net or at least one wire mesh or any combination thereof.

13. The exhaust system according to one of Claims 1 to 12,
**characterised by** a further flow-guiding body (29), through which the exhaust gas stream (8) can flow and which projects in a free-standing manner into an exit region (30) of the metal bellows (15).

14. The exhaust system according to Claim 13,
**characterised in that**
- the flow-guiding body (16) arranged on the entry side projects in a free-standing manner with its outlet end (20) into an inlet end (31) of the further flow-guiding body (29) arranged on the exit side, and/or
- the flow-guiding body (29) arranged on the exit side is fastened with its outlet end (34), in particular by means of webs (35), to the metal bellows (15) or to a guiding section (22), which is arranged downstream of the metal bellows (15), and/or
- the flow-guiding body (29) arranged on the exit side tapers in the flow direction of the exhaust gas stream (8), at least in a longitudinal section (37).

## Revendications

1. Installation de gaz d'échappement pour un moteur à combustion interne (1), en particulier d'un véhicule automobile,
- avec au moins une ligne de gaz d'échappement (38), dans laquelle sont disposés un catalyseur SCR (10) et, en amont de celui-ci, un dispositif d'amenée d'agent de réduction (11) servant à introduire un agent de réduction dans le flux de gaz d'échappement (8),
- dans laquelle un élément de conduite (14) flexible est disposé dans la ligne de gaz d'échappement (38) entre le dispositif d'amenée d'agent de réduction (11) et le catalyseur SCR (10), lequel élément de conduite présente un soufflet métallique (15) ondulé de manière à présenter une forme annulaire ou une forme hélicoïdale, pouvant être traversé par un flux de gaz d'échappement (8) et un corps conducteur d'écoulement (16) conique, qui peut être traversé par le flux de gaz d'échappement (8), qui se rétrécit dans la direction d'écoulement du flux de gaz d'échappement (8) et qui fait saillie de manière indépendante dans une zone d'entrée (17) du soufflet métallique (15),
**caractérisée en ce**
**que** le corps conducteur d'écoulement (16) présente un dispositif de séparation (26) pour de l'urée et/ou des dérivés d'urée ou est configuré en tant que tel.

2. Installation de gaz d'échappement selon la revendication 1,
**caractérisée en ce**
**que** le corps conducteur d'écoulement (16) est fixé, par son extrémité d'admission (19), au soufflet métallique (15) ou à une section de conduite (21) disposée en amont du soufflet métallique (15).

3. Installation de gaz d'échappement selon la revendication 1 ou 2,
**caractérisée en ce**
**que** le corps conducteur d'écoulement (16) est un corps tubulaire (23) conique.

4. Installation de gaz d'échappement selon la revendication 3,
**caractérisée en ce**
**qu'**une gaine (24) du corps tubulaire (23) est perforée.

5. Installation de gaz d'échappement selon l'une quelconque des revendications 1 à 4,
**caractérisée en ce**
**que** le dispositif de séparation (26) est configuré sous la forme d'un dispositif de collecte pour des dépôts de dérivé d'urée ou présente un de ce type.

6. Installation de gaz d'échappement selon l'une quelconque des revendications 1 à 5,
**caractérisée en ce**
**que** le dispositif de séparation (26) est configuré sous la forme d'un blocage d'écoulement pour une couche marginale du flux de gaz d'échappement (8).

7. Installation de gaz d'échappement selon la revendication 3 ou 4 ainsi que selon l'une quelconque des revendications 1, 2, 5 et 6,
**caractérisée en ce**
**que** le dispositif de séparation (26) est formé par un corps annulaire ou présente un corps annulaire, qui dépasse du corps tubulaire (23) radialement vers l'intérieur et qui s'étend de manière fermée dans la direction périphérique.

8. Installation de gaz d'échappement au moins selon la revendication 3,
**caractérisée en ce**
**qu'**un mélangeur (28) statique est disposé ou réalisé dans le corps tubulaire (23).

9. Installation de gaz d'échappement selon la revendication 8,
**caractérisée en ce**
**que** le mélangeur (28) est configuré sous la forme d'un composant séparé et est inséré dans le corps tubulaire (23).

10. Installation de gaz d'échappement selon la revendication 8,
**caractérisée en ce**
**que** des pales directrices sont formées au niveau d'une gaine (24) du corps tubulaire (23), lesquelles forment le mélangeur (28).

11. Installation de gaz d'échappement selon l'une quelconque des revendications 1, 2, et 4 à 6,
**caractérisée en ce**
**que** le corps conducteur d'écoulement (16) est un corps plein (27) conique, qui est constitué d'un matériau ou d'un mélange de matériaux pouvant être traversé par un flux.

12. Installation de gaz d'échappement selon la revendication 11,
**caractérisée en ce**
**que** le corps plein (27) présente au moins une mousse céramique ou au moins un treillis de fils de fer ou au moins un tricot de fils de fer ou une combinaison quelconque de ceux-ci.

13. Installation de gaz d'échappement selon l'une quelconque des revendications 1 à 12,
**caractérisée par** un autre corps conducteur d'écoulement (29), qui peut être traversé par le flux de gaz d'échappement (8) et qui fait saillie de manière indépendante dans une zone de sortie (30) du soufflet métallique (15).

14. Installation de gaz d'échappement selon la revendication 13,
**caractérisée en ce**
- **que** le corps conducteur d'écoulement (16) disposé côté entrée fait saillie de manière indépendante, par son extrémité d'évacuation (20), dans une extrémité d'admission (31) de l'autre corps conducteur d'écoulement (29) disposé côté sortie, et/ou
- **que** le corps conducteur d'écoulement (29) disposé côté sortie est fixé, par son extrémité d'évacuation (34), en particulier par l'intermédiaire d'entretoises (35), au soufflet métallique (15) ou à une section de conduite (22), qui est disposée en aval du soufflet métallique (15), et/ou
- **que** le corps conducteur d'écoulement (29) disposé côté sortie se rétrécit au moins dans une section longitudinale (37) dans la direction d'écoulement du flux de gaz d'échappement (8).
